# EUROPEAN PATENT SPECIFICATION

(11) **EP 2 079 640 B1**
(45) Date of publication and mention of the grant of the patent: **29.02.2012**
(21) Application number: 07833959.5
(22) Date of filing: 09.11.2007
(51) Int. Cl.: B65D 25/56, B29C 45/14, B29C 45/16

(54) **A VESSEL HAVING TRANSPARENT WINDOWS**
GEFÄSS MIT TRANSPARENTEN FENSTERN
RÉCIPIENT PRÉSENTANT DES FENÊTRES TRANSPARENTES

(30) Priority: 09.11.2006 KR 20060029370 U
(43) Date of publication of application: 22.07.2009
(73) Proprietor: Yonwoo Co., Ltd., Incheon 404-817 (KR)
(72) Inventor: JO, Hae Lyong, Incheon 404-250 (KR)
(74) Representative: Patentanwaltskanzlei WILHELM & BECK
(86) International application number: PCT/KR2007/005652
(87) International publication number: WO 2008/056960

(56) References cited:
- EP-A2- 0 700 837
- JP-A- 04 311 459
- JP-A- 2001 287 720
- KR-A- 940 011 305
- US-A1- 2004 096 608

## Description

### Technical Field

The present invention relates to a vessel having transparent windows, and more particularly, to a vessel having transparent windows which is easy to manufacture, has a reduced manufacturing cost, and is competitive due to its beautiful appearance.

### Background Art

Recently, vessels having transparent windows provided to sides thereof have been used so that the contents contained therein can be easily checked from outside. Such a vessel includes an interior vessel provided with transparent windows and made of transparent material, and an exterior vessel, into which the interior vessel is inserted. The vessels are formed such that the interior vessel is covered with the metal exterior vessel, which has an oblong slot in one side thereof. However, in the vessels formed in this manner, a step is formed between the interior vessel and the exterior vessel when the slot is viewed from outside, which negatively affects the appearance of the vessel.

Subsequently, the vessel was formed in a manner such that an oblong protrusion is formed on the side of the interior vessel, a slot corresponding to the protrusion is formed in the exterior vessel for insertion of the protrusion, and the interior vessel is inserted in the exterior vessel. The upper end of the slot of the exterior vessel must be open in order to allow the protrusion of the interior vessel to be inserted therein, and the open upper end negatively affected the appearance of the vessel. In addition, since the interior vessel and the exterior vessel are separately molded, a gap was formed between the protrusion of the interior vessel and the slot of the exterior vessel at the time of assembly. Accordingly, the problem in which the appearance is affected by the upper end or the gap still remains.

### Disclosure of Invention

### Technical Problem

The present invention aims to solve these problems, and an object of the invention is to provide a vessel having transparent windows which is easily manufactured since an exterior vessel is molded integrally with a transparent vessel in a manner such that the transparent windows are exposed to outside and thus a separate assembly process is thereby obviated, which can be manufactured at the reduced manufacturing cost because the exterior vessel is injection-molded, and which has a beautiful appearance.

US 2004/0096608 discloses a prior art vessel where a transparent layer is molded inside an opaque layer provided with a window.

### Technical Solution

In order to achieve the above-described object, the invention pertains to a vessel including: an interior vessel which is made of transparent material, has an inlet formed in an upper end thereof for allowing contents to be introduced thereinto, and is made by injection molding so as to have a protrusion on a side thereof, which is oriented in a longitudinal direction thereof; and an exterior vessel which covers the exterior surface of the interior vessel in a manner such that the front surface of the protrusion of the interior vessel is exposed to outside and which is made through injection molding so as to be formed integrally with the interior vessel, in which the amount of the contents in the interior vessel can be checked by a user through the protrusion of the interior vessel, which is exposed to outside.

### Advantageous Effects

As described above, according to the invention, the exterior vessel 2 is integrally formed with the interior vessel 1 through injection molding in a manner such that the front surface of the protrusion provided on the side of the interior vessel 1 is exposed to the outside. Accordingly, an additional assembly process is not needed so that the vessel can be easily manufactured. In addition, the invention can provide a vessel having a protrusion which can be manufactured at decreased cost as compared to the known vessels which are metal molded. Since a step, which is otherwise formed between the interior vessel and the exterior vessel made of metal material, is not formed, and a gap, which is formed when the interior vessel and the exterior vessel are separately molded and assembled, is not formed therebetween, a more beautiful appearance can be provided. Further, since the exterior vessel 3 as manufactured so as to cover the upper end of the protrusion 2 as well as the lower end of the protrusion 2, a more beautiful appearance can be provided compared to the known vessels which are manufactured by assembly of the interior vessel and the exterior vessel.

### Brief Description of the Drawings

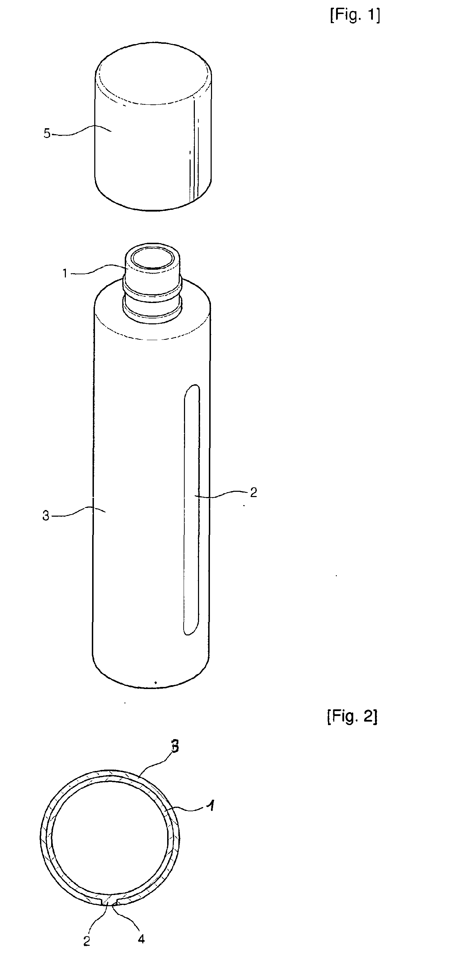

Fig. 1 is a perspective view illustrating a vessel according to one embodiment of the invention; and

Fig. 2 is a sectional view of the embodiment.

*Brief Description of Reference Numerals of Key Elements in the Drawings *

1: transparent vessel

2: protrusion

3: exterior vessel

### Best Mode for Carrying Out the Invention

Hereinafter, a preferred embodiment of the invention will be described with reference to the accompanying drawings.

As shown in the figures, the vessel having the transparent windows according to the invention is technically characterized in that an interior vessel 1, which has an inlet formed in the upper end thereof for introduction of contents and a protrusion 2 protruding from one side thereof and oriented in a longitudinal direction, is formed integrally with an exterior vessel 3, which has an outside diameter corresponding to the diameter of an imaginary circle passing the outermost surface of the protrusion 2 so that the outermost surface of the protrusion 2 is exposed outside.

The interior vessel 1 is made of transparent synthetic resin or the like by injection molding, injection blow molding or the like, and it has an oblong tube shape. The interior vessel 1 has the oblong tube shape extending in one direction and having the open upper end serving as an inlet used for introduction and discharge of the contents. The interior vessel 1 is further provided with the elongate protrusion 2 which has a predetermined width, protrudes from the side thereof and is oriented in the longitudinal direction thereof. At this time, the interior vessel 1 is filled with the contents, and the amount of the contents in the interior vessel 1 can be checked through the protrusion 2.

The exterior vessel 3 is made of synthetic resin by injection molding so as to be formed integrally with the interior vessel 1 and to cover the interior vessel 1. The exterior vessel 3 has an oblong tube shape and surrounds the interior vessel 1. In one side of this exterior vessel 3 there is an oblong slot 4 corresponding to the protrusion 2. Accordingly, the protrusion 2 of the interior vessel 1 is exposed to outside, and thus a user can check the amount of the contents remaining in the interior vessel 1 through the protrusion 2, and the protrusion 2 forms a transparent window when viewed from the outside of the vessel. Reference numeral 5, which has not been described, denotes a cap for covering the upper end of the vessel.

The exterior vessel 3 can be marked with a scale (not shown) through a printing or carving process on the exterior surface on one side of the portion through which the protrusion 2 of the interior vessel 1 is exposed, so that the user can easily check the amount of the contents.

Processes of manufacturing the vessel having the transparent windows formed in this manner will be described below.

First, the interior vessel 1 is manufactured through injection molding or the like, and then injection molding is also performed using a mold surrounding the interior vessel 1 so that the peripheral surface of the interior vessel 1 is covered with the exterior vessel 3. In this way, a finished product of the vessel is manufactured. At this time, the injection molding is performed in a manner such that the protrusion 2 is exposed to outside. In addition, the injection molding must be performed in a manner such that the total thickness of the side walls of the interior vessel 1 and the exterior vessel 3 is 3 mm or less. That is, the thickness of the interior vessel 1 including the protrusion 2 is about 3 mm. On the other hand, according to the conventional method, the protrusion of vessels is about 6 mm thick because the exterior vessel and the interior vessel are separately manufactured and then assembled into a vessel. This generally leads to thermal deformation of the vessel. Accordingly, the protrusion of the conventional vessel has been provided with a slot on the inside surface thereof for the purpose of suppressing thermal deformation of the vessel by reducing the total thickness of the protrusion. On the other hand, there is almost no likelihood that the vessel according to the invention is thermally deformed even though it does not have a slot on the inside surface of the protrusion. Moreover, since the exterior vessel 3 has the elongated slot 4 corresponding to the protrusion 2, contributing to the tight contact between the entire side of the protrusion 2 and the exterior vessel 3, the gap, which is formed when the conventional interior and exterior vessels are separately molded and assembled, or the step, which is formed when the interior vessel is covered with the metal exterior vessel, is not formed, whereby a beautiful appearance can be provided.

The invention described above is not limited to the above-described embodiment and the accompanying drawings, but it will be understood by those skilled in the art that various substitutions, modifications and changes can be made without departing from the technical scope of the invention, as defined by the appended claims.

## Claims

1. A vessel having transparent windows comprising:
an interior vessel (1) made of transparent material by injection-molding so as to have an inlet in an upper end thereof for introduction of contents and a protrusion (2) oriented in a longitudinal direction thereof on one side thereof; and
an exterior vessel (3) injection-molded integrally with the interior vessel so as to cover a peripheral surface of the interior vessel except the protrusion so that a front surface of the protrusion of the interior vessel is exposed to outside, wherein an amount of the contents in the interior vessel can be checked by a user through the protrusion of the interior vessel exposed outside.

## Patentansprüche

1. Gefäß mit transparenten Fenstern, aufweisend:
ein durch Spritzgießen hergestelltes inneres Gefäß (1) aus einem transparenten Werkstoff, wobei ein Einlass an einem oberen Ende zum Einbringen von Inhalten und eine Vorwölbung (2), welche in einer Längsrichtung orientiert ist, entstehen; und
ein äußeres Gefäß (3), welches durch Spritzgießen integral mit dem inneren Gefäß hergestellt ist, wobei eine äußere Oberfläche des inneren Gefäßes ausgenommen die Vorwölbung bedeckt ist, so dass eine vordere Oberfläche der Vorwölbung des inneren Gefäßes nach außen freigelegt ist, wobei ein Teil der Inhalte des inneren Gefäßes von einem Benutzer durch die nach außen freiliegende Vorwölbung des inneren Gefäßes geprüft werden kann.

## Revendications

1. Récipient présentant des fenêtres transparentes, comprenant :
un récipient intérieur (1) fabriqué en matériau transparent par moulage par injection de manière à avoir une entrée dans une extrémité supérieure de celui-ci, pour l'introduction d'un contenu, et une saillie (2) orientée dans une direction longitudinale de celui-ci, d'un côté de celui-ci ; et
un récipient extérieur (3) moulé par injection intégralement avec le récipient intérieur de manière à couvrir une surface périphérique du récipient intérieur à l'exception de la saillie de telle sorte qu'une surface avant de la saillie du récipient intérieur soit exposée à l'extérieur, une quantité du contenu dans le récipient intérieur pouvant être contrôlée par un utilisateur par le biais de la saillie du récipient intérieur exposée à l'extérieur.
